# FASCICULE DE BREVET EUROPEEN

(11) **EP 1 585 691 B1**
(45) Date de publication et mention de la délivrance du brevet: **12.09.2007**
(21) Numéro de dépôt: 03815839.0
(22) Date de dépôt: 24.12.2003
(51) Int. Cl.: B65G 15/08

(54) **BANDE DE CONVOYAGE, CONVOYEUR A BANDE LA COMPORTANT**
FÖRDERBAND UND DIESES UMFASSENDES BANDFÖRDERSYSTEM
CONVEYOR BELT AND BELT CONVEYOR SYSTEM COMPRISING SAME

(30) Priorité: 13.01.2003 FR 0300319
(43) Date de publication de la demande: 19.10.2005
(73) Titulaire: Brunone, René, 27950 Saint Marcel (FR)
(72) Inventeur: Brunone, René, 27950 Saint Marcel (FR)
(74) Mandataire: Blot, Philippe Robert Emile
(86) Numéro de dépôt international: PCT/FR2003/003902
(87) Numéro de publication internationale: WO 2004/071907

(56) Documents cités:
- EP-A- 0 058 040
- GB-A- 1 344 564
- US-A- 3 089 581
- US-A- 3 662 891
- US-A- 3 762 558

## Description

La présente invention concerne une bande de convoyage refermée en boucle.

Dans de nombreuses situations, il est nécessaire de transporter des produits, tels que des granulats, des produits agricoles ou des minerais au travers d'une étendue d'eau.

Pour ce faire, il est connu de mettre en place, à la surface de l'eau, une succession de châssis flottants reliés les uns aux autres en enfilade. Ces châssis flottants comportent chacun des moyens de support d'une bande convoyeuse refermée en boucle.

La bande convoyeuse est maintenue entre deux rouleaux d'extrémité assurant son retournement. L'un des rouleaux est moteur pour assurer l'entraînement de la bande.

De tels convoyeurs fonctionnent de manière satisfaisante. Toutefois, leur structure est relativement complexe, de sorte que leur fabrication et leur mise en place sont délicates et coûteuses.

Il est connu de US-A-3 089 581 un convoyeur à bande du type décrit dans le préambule de la revendication 1.

L'invention a pour but de proposer un convoyeur dont la fabrication et la mise en place sont simples.

A cet effet, l'invention a pour objet un convoyeur à bande selon la revendication 1.

Le convoyeur à bande selon l'invention peut comprendre l'une ou plusieurs des caractéristiques qui font l'objet des revendications 2 à 11.

L'invention a également pour objet un procédé de transport de matériaux selon la revendication 12.

Elle a enfin pour objet un procédé de récupération d'une substance flottante selon la revendication 13.

L'invention sera mieux comprise à la lecture de la description qui va suivre, donnée uniquement à titre d'exemple et faite en se référant aux dessins, sur lesquels :
- la figure 1 est une vue schématique de dessus d'un convoyeur selon l'invention;
- la figure 2 est une vue en section transversale de la bande du convoyeur de la figure 1 prise suivant la ligne 2-2 ;
   la figure 3 est une vue en section à plus grande échelle d'un bord latéral de la bande ;
- les figures 4 et 5 sont des vues à plus grande échelle, respectivement de côté et de dessus d'une extrémité du convoyeur ;
- la figure 6 est une vue identique à celle de la figure 3 illustrant une phase de fabrication de la bande ; et
- les figures 7 et 8 sont des vues identiques aux figures 1 et 2 d'une variante de réalisation d'un convoyeur selon l'invention.

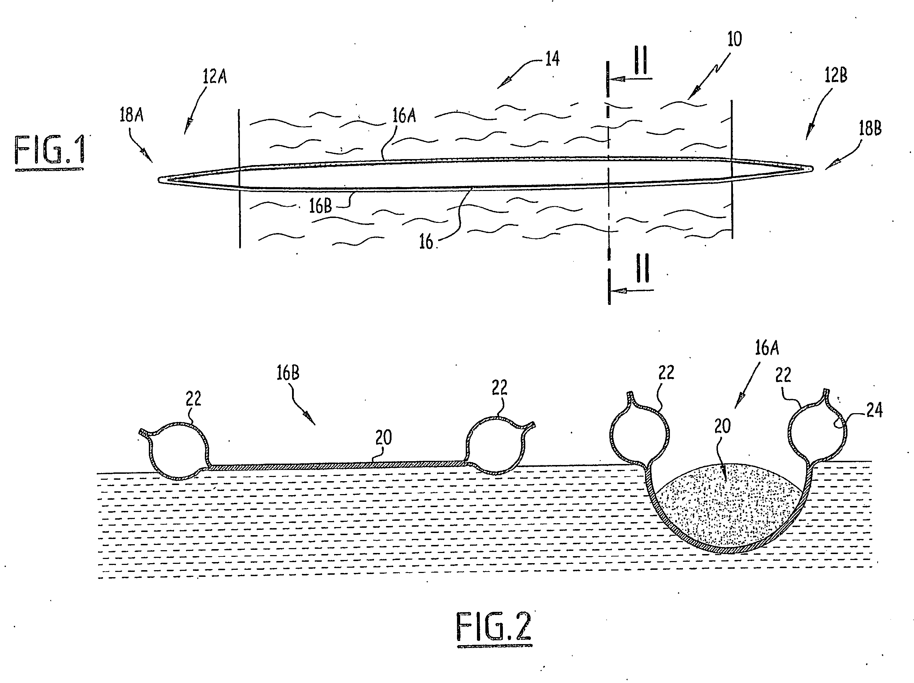

Sur la figure 1 est représenté un convoyeur 10 selon l'invention. Ce convoyeur est installé entre les deux rives opposées 12A, 12B d'une étendue d'eau telle qu'un lac 14.

Le convoyeur comporte essentiellement une bande transporteuse flottante 16 refermée en boucle pour former une bande sans fin et deux unités de retournement 18A, 18B disposées à chacune des extrémités du convoyeur sur les rives 12A et 12B.

Comme illustré sur la figure 2, la bande 16 présente, dans sa partie médiane, une plage continue 20 de support pour les produits à transporter et, latéralement sur chacun des bords, des boudins de flottabilité longitudinaux 22. Les boudins 22 s'étendent suivant toute la longueur de la bande sans fin et sont intégrés dans l'épaisseur de cette bande.

Les boudins 22 ont une section intérieure, par exemple, sensiblement circulaire. Pour une bande d'une largeur comprise entre 1 m et 4 m, le diamètre des boudins 22 est compris entre 10 cm et 50 cm.

Les boudins 22 s'étendent suivant toute la longueur de la bande refermée en boucle et définissent ainsi un espace clos annulaire 24. Cet espace clos est empli d'un gaz tel que de l'air à une pression comprise entre 1 bar et 5 bars et avantageusement de l'ordre de 2 bars.

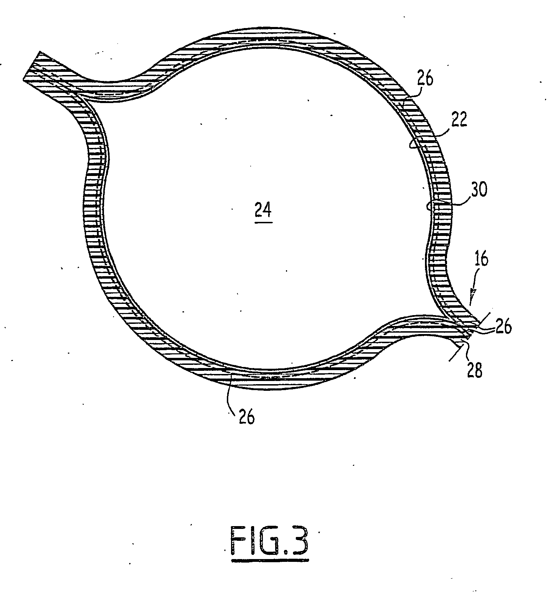

La structure de la bande 16 est représentée plus en détail sur la figure 3. Cette bande comporte deux nappes de renfort internes 26 s'étendant suivant toute la surface de la bande. Ces nappes 26 sont noyées dans un matériau élastique 28 tel que du caoutchouc vulcanisé.

Les deux nappes 26 s'étendent de part et d'autre des boudins 22.

Le boudin 22 est délimité par une membrane tubulaire imperméable 30 formant un chemisage délimitant, pour chaque boudin, une unique poche étanche aux gaz. La membrane 30 est reçue dans l'épaisseur de la bande.

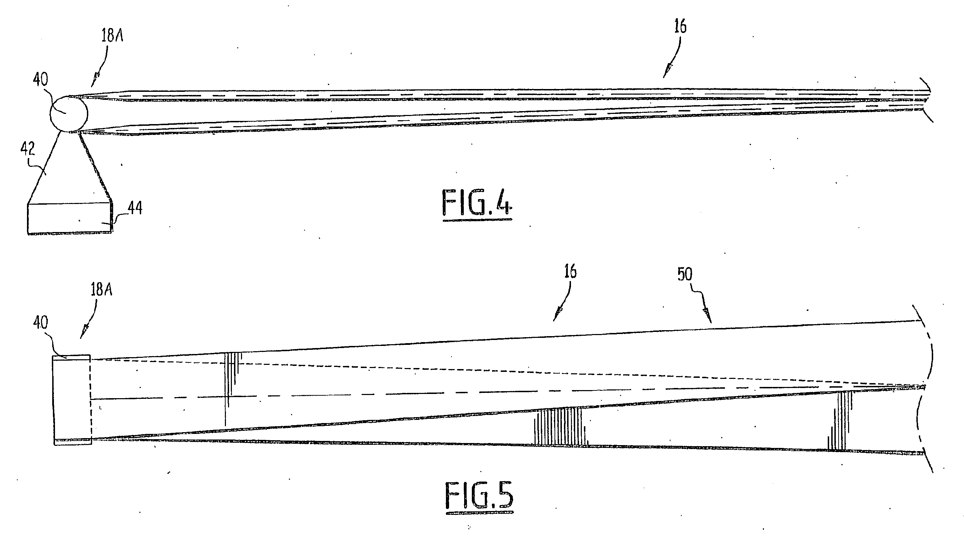

Une unité de retournement 18A, prévue à l'extrémité du convoyeur, est illustrée à plus grande échelle sur les figures 4 et 5.

Cette unité comporte un rouleau de retournement 40 monté rotatif sur un portique 42, lui-même posé sur le sol où il est ancré. Le portique 42 est par exemple fixé à un massif 44.

La bande 16 est engagée autour des rouleaux de retournement. La tension de la bande entre les deux unités de retournement extrêmes est telle que les boudins de flottabilité 22 sont comprimés et aplatis dans la région de la bande engagée autour des rouleaux de retournement 40.

L'un des rouleaux 40 est équipé de moyens d'entraînement permettant sa mise en rotation et l'entraînement de la bande 16.

Comme illustré sur la figure 5, les unités de retournement d'extrémité 18A comportent des moyens 50 d'écartement latéral des deux brins de la bande. Ainsi, les brins supérieur et inférieur de la bande engagée autour du rouleau de retournement 40 sont déportés latéralement de part et d'autre de l'axe longitudinal du convoyeur.

Les unités de retournement 18A, 18B sont telles que les faces de la bande en contact avec le liquide sont opposées suivant le brin amont et le brin aval de la bande.

Comme illustré sur les figures 1 et 2, les deux brins de la bande sont alors adjacents dans la partie courante du convoyeur en s'étendant dans un même plan à la surface de l'eau.

Les moyens d'écartement 50 sont formés par exemple de berceaux de guidage de chacun des brins de la bande. Ces berceaux sont propres à supporter la bande et à assurer son déport latéral. A cet effet, ils sont décalés chacun d'un côté de l'axe longitudinal du convoyeur et sont inclinés vers l'extérieur du convoyeur.

Sur la figure 2, le brin de transport noté 16A a sa plage de support médiane 20 chargée de produits, de sorte que ce brin reposant directement à la surface de l'eau forme une cuvette. Les deux bords latéraux de la bande sont maintenus hors de l'eau par ies boudins de flottabilité longitudinaux 22.

En revanche, le brin de retour 16B non chargé flotte sensiblement à plat à la surface de l'eau.

Ainsi, en fonctionnement, les deux brins de la bande sont portés suivant toute la longueur du convoyeur en flottant directement à la surface de l'eau sans qu'aucun moyen de support extérieur ne soit nécessaire.

On conçoit qu'un tel convoyeur est simple à fabriquer et à mettre en oeuvre.

Un tel convoyeur peut être utilisé même dans une zone initialement dépourvue d'étendue d'eau. Dans ce cas, il convient, pour permettre la mise en place du convoyeur, de créer un canal de faible profondeur, par exemple de l'ordre d'un mètre, et d'emplir ce canal d'eau. Les deux brins de la bande sont appliqués à la surface de l'eau contenue dans le canal.

La bande 16 est fabriquée suivant le procédé suivant.

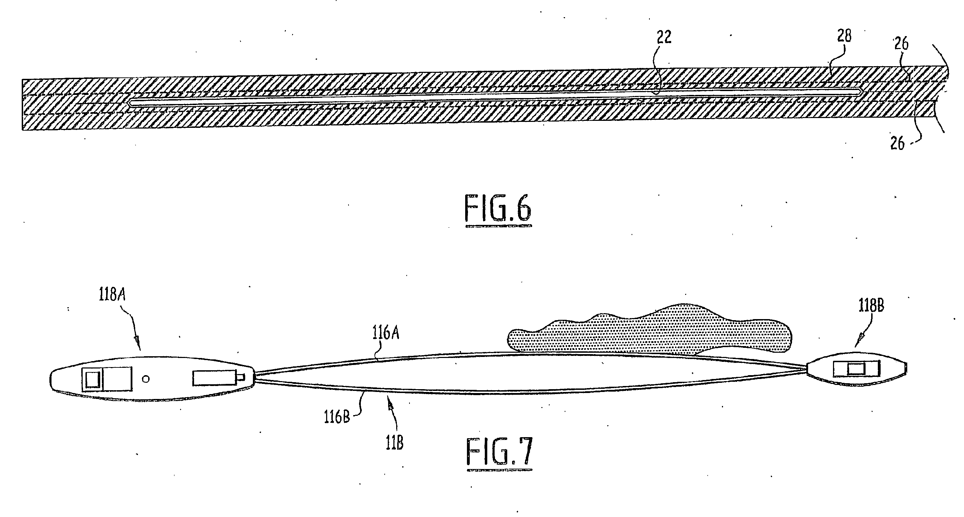

Une ébauche de bande est d'abord fabriquée. Cette ébauche est constituée, comme illustré sur la figure 6, d'une bande plane non encore refermée en boucle. Cette bande comporte les deux nappes 26. Sur les bords longitudinaux de la bande, est disposée, entre les deux nappes 26, la membrane tubulaire 30 destinée à délimiter les boudins de flottabilité. Cette membrane est alors aplatie. Les deux nappes 26 et les membranes 30 sont noyées dans le caoutchouc 28. Ce dernier est ensuite vulcanisé.

La bande plane est alors refermée en boucle et ses deux extrémités sont raboutées l'une à l'autre. En particulier, les extrémités des membranes tubulaires 30 sont reliées bout à bout pour former des espaces clos annulaires.

Avantageusement, des bandes de renfort supplémentaires sont ajoutées dans la région de liaison des deux extrémités de l'ébauche de bande plane.

Après aboutement des deux extrémités de la bande, les deux boudins de flottabilité sont gonflés par introduction d'air sous pression au travers d'un orifice temporaire. L'orifice est ensuite rebouché.

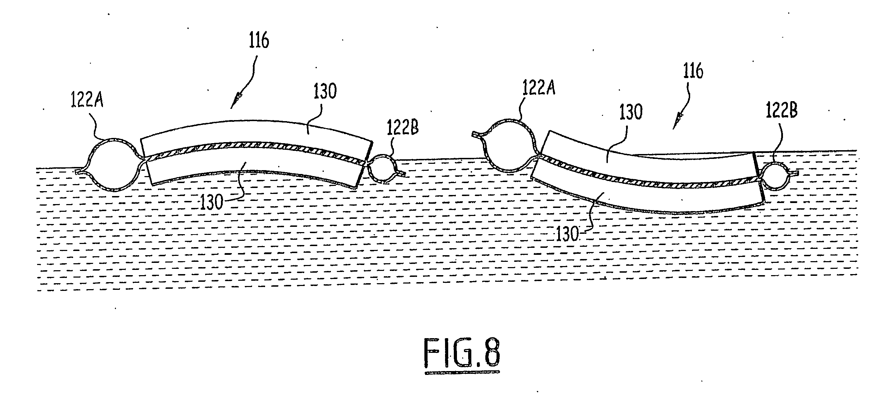

Suivant une variante de réalisation, illustrée sur les figures 7 et 8, la bande notée 116 est maintenue entre deux navires distants 118A, 118B sur lesquels sont montées les unités de retournement. Les navires 118A, 118B sont maintenus à distance pour assurer une tension suffisante de la bande avec ses deux brins notés 116A, 116B s'étendant côte à côte à la surface de l'eau.

Cette bande comporte deux boudins de flottabilité 122A, 122B de dimensions différentes, de sorte que, comme illustré sur la figure 8, lorsque la bande repose à la surface de l'eau, l'un des bords longitudinaux de la bande est partiellement immergé alors que l'autre est maintenu au-dessus de la surface de l'eau.

Par exemple, pour une bande de 1 m à 5 m de large, le boudin 122A assurant la plus grande flottabilité a un diamètre compris entre 10 cm et 50 cm, alors que le boudin 122B assurant une flottabilité plus faible a un diamètre compris entre 5 cm et 20 cm.

Avantageusement, le boudin 122B est lesté par exemple avec un fil de plomb inséré dans l'épaisseur de la bande pour conférer un niveau de flottabilité requis.

En outre, la bande comporte, dans sa plage médiane de support, et avantageusement suivant ses deux faces, des traverses en saillie 130 régulièrement réparties. Ces traverses s'étendent suivant toute la largeur de la bande d'un boudin de flottabilité à l'autre.

On comprend que, lors du déplacement de la bande, l'un des brins 116A est partiellement immergé, de sorte qu'il est susceptible de recueillir des substances flottantes à la surface de l'eau et d'acheminer celles-ci jusqu'au navire aval en considérant le sens de déplacement du brin 116A.

Un tel convoyeur peut être utilisé notamment pour recueillir des nappes de pétrole flottant à la surface de la mer, après le naufrage d'un navire de transport.

## Revendications

1. Convoyeur à bande comportant une bande de convoyage refermée en boucle (16) et deux unités distantes (18A, 18B) de retournement de la bande entre lesquelles la bande est maintenue, chaque unité de retournement (18A, 18B) comportant un rouleau de retournement (40) autour duquel la bande (16 ; 116) est engagée, la bande de convoyage (16 ; 116) comportant, dans sa partie médiane, une plage de support continue (20) et, latéralement, au moins un boudin de flottabilité longitudinal (22 ; 122A, 122B), **caractérisé en ce que** l'un des rouleaux (40) est équipé de moyens d'entraînement permettant sa mise en rotation et l'entraînement de la bande (16).

2. Convoyeur à bande selon la revendication 1, **caractérisé en ce que** le ou chaque boudin de flottabilité (22 ; 122A, 122B) est intégré dans l'épaisseur de la bande (16 ; 116).

3. Convoyeur à bande selon l'une quelconque des revendications précédentes, **caractérisé en ce que** le ou chaque boudin de flottabilité (22 ; 122A, 122B) forme un unique espace clos annulaire (24) s'étendant suivant toute la circonférence de la bande.

4. Convoyeur à bande selon la revendication 3, **caractérisé en ce que** le ou chaque espace clos (24) est maintenu à une pression comprise entre 1 bar et 5 bars.

5. Convoyeur à bande selon l'une quelconque des revendications précédentes, **caractérisé en ce que** la bande (16 ; 116) comporte un boudin de flottabilité (22 ; 122A, 122B) suivant chaque bord longitudinal de la bande.

6. Convoyeur à bande selon la revendication 5, **caractérisé en ce que** les flottabilités conférées à la bande (116) par les deux boudins de flottabilité longitudinaux (122A, 122B) sont différentes.

7. Convoyeur à bande selon la revendication 6, **caractérisé en ce que** les sections transversales des deux boudins de flottabilité longitudinaux (122A, 1228) sont différentes.

8. Convoyeur à bande selon l'une quelconque des revendications précédentes, **caractérisé en ce que** la bande (116) comporte, sur au moins une face, des nervures transversales (130) réparties suivant au moins une partie de la circonférence de la bande.

9. Convoyeur à bande selon la revendication 8, **caractérisé en ce que** la bande (116) comporte des nervures transversales (130) sur ses deux faces opposées.

10. Convoyeur à bande selon l'une quelconque des revendications précédentes, **caractérisé en ce que** chaque unité de retournement (18A, 18B) comporte des moyens (50) d'écartement latéraux des deux brins (16A, 16B ; 116A, 116B) de la bande issus du même rouleau de retournement (40).

11. Convoyeur à bande selon l'une quelconque des revendications précédentes, **caractérisé en ce que** les unités de retournement (18A, 18B) sont telles que les faces de la bande en contact avec le liquide sont opposées suivant le brin amont et le brin aval de la bande.

12. Procédé de transport de matériaux, **caractérisé en ce qu'**il comprend les étapes de faire circuler, directement à la surface d'une étendue de liquide, une bande (16 ; 116) d'un convoyeur selon l'une quelconque des revendications précédentes et disposer les matériaux à transporter sur la plage de support (20) supérieure de la bande flottant à la surface de l'étendue de liquide.

13. Procédé de récupération d'une substance flottante, notamment du pétrole, à la surface d'une étendue de liquide, **caractérisé en ce qu'**il comprend la mise en circulation d'une bande d'un convoyeur selon la revendication 8 ou 9 avec un premier bord seulement partiellement immergé et le second bord latéral totalement immergé.

## Claims

1. Belt conveyor system comprising a conveyor belt which is closed in a loop (16) and two remote units (18A, 18B) for returning the belt, between which units the belt is retained, each return unit (18A, 18B) comprising a return roller (40) about which the belt (16; 116) is engaged, the conveyor belt (16; 116) comprising, in its median part, a continuous support area (20) and, laterally, at least one longitudinal buoyancy bulge (22; 112A, 122B), **characterised in that** one of the rollers (40) is equipped with actuation means which permit the rotation thereof and actuation of the belt (16).

2. Belt conveyor system according to claim 1, **characterised in that** the or each buoyancy bulge (22; 122A, 122B) is integrated into the thickness of the belt (16; 116).

3. Belt conveyor system according to any of the preceding claims, **characterised in that** the or each buoyancy bulge (22; 122A, 122B) forms a single closed annular space (24) which extends along the whole circumference of the belt.

4. Belt conveyor system according to claim 3, **characterised in that** the or each closed space (24) is maintained at a pressure between 1 and 5 bars.

5. Belt conveyor system according to any of the preceding claims, **characterised in that** the belt (16; 116) comprises a buoyancy bulge (22; 122A, 122B) along each longitudinal edge of the belt.

6. Belt conveyor system according to claim 5, **characterised in that** the buoyancies given to the belt (116) by the two longitudinal buoyancy bulges (122A, 122B) are different.

7. Belt conveyor system according to claim 6, **characterised in that** the transverse sections of the two longitudinal buoyancy bulges (122A, 122B) are different.

8. Belt conveyor system according to any of the preceding claims, **characterised in that** the belt (116) comprises, on at least one face, transverse ribs (130) which are distributed along at least one part of the circumference of the belt.

9. Belt conveyor system according to claim 8, **characterised in that** the belt (116) comprises transverse ribs (130) on the two opposite faces thereof.

10. Belt conveyor system according to any of the preceding claims, **characterised in that** each return unit (18A, 18B) comprises means (50) for lateral spacing of the two strands (16A, 16B; 116A, 116B) of the belt coming from the same return roller (40).

11. Belt conveyor system according to any of the preceding claims, **characterised in that** the return units (18A, 18B) are such that the faces of the belt which are in contact with the liquid are opposite along the upstream strand and the downstream strand of the belt.

12. Method for transporting materials, **characterised in that** it comprises the steps of circulating, directly on the surface of a stretch of liquid, a belt (16; 116) of a conveyor according to any of the preceding claims and disposing the materials to be transported on the upper support area (20) of the belt floating on the surface of the stretch of liquid.

13. Method for recovering a floating substance, in particular oil, on the surface of a stretch of liquid, **characterised in that** it comprises circulating a belt of a conveyor according to claim 8 or 9 with a first edge only partially immersed and the second lateral edge totally immersed.

## Patentansprüche

1. Bandförder-Vorrichtung, aufweisend ein eine geschlossene schleife ausbildendes Förderband (16) und zwei im Abstand voneinander angeordnete Einheiten (18A, 18B) zum Wenden des Bandes, zwischen welchen das Band gehalten wird, wobei jede Wendeeinheit (18A, 18B) eine Wendewalze (40) aufweist, welche von dem Band (16; 116) umgriffen wird, wobei das Förderband (16; 116) in seinem mittleren Abschnitt einen durchlaufenden Stützbereich (20) und seitlich mindestens einen Längs-Schwimmwulst (22; 122A, 122B) aufweist, **dadurch gekennzeichnet, dass** eine der Walzen (40) mit Antriebsmitteln versehen ist, die sein In-Drehung-Bringen und den Antrieb des Bandes (16) ermöglichen.

2. Bandförder-Vorrichtung gemäß Anspruch 1, **dadurch gekennzeichnet, dass** der oder jeder Schwimmwulst (22; 122A, 122B) in der Dicke des Bandes (16; 116) integriert ist.

3. Bandförder-Vorrichtung gemäß einem der vorherigen Ansprüche, **dadurch gekennzeichnet, dass** der oder jeder Schwimmwulst (22; 122A, 122B) einen einzelnen, ringförmig umschlossenen Raum (24) ausbildet, der sich den gesamten Umfang des Bandes entlang erstreckt.

4. Bandförder-Vorrichtung gemäß Anspruch 3, **dadurch gekennzeichnet, dass** der oder jeder umschlossene Raum (24) auf einem Druck gehalten wird, der zwischen 1 bar und 5 bar aufweist.

5. Bandförder-Vorrichtung gemäß einem der vorherigen Ansprüche, **dadurch gekennzeichnet, dass** das Band (16; 116) einen Schwimmwulst (22; 122A, 122B) entlang jeder Längsseite des Bandes aufweist.

6. Bandförder-Vorrichtung gemäß Anspruch 5, **dadurch gekennzeichnet, dass** die Schwimmfähigkeiten, die an dem Band (116) mittels der beiden Längs-Schwimmwülste (122A, 122B) vorgesehen sind, unterschiedlich sind.

7. Bandförder-Vorrichtung gemäß Anspruch 6, **dadurch gekennzeichnet, dass** die Querschnitte der beiden Längs-Schwimmwulste (122A, 122B) unterschiedlich sind.

8. Bandförder-Vorrichtung gemäß einem der vorherigen Ansprüche, **dadurch gekennzeichnet, dass** das Band (116) auf mindestens einer Seite Querversteifungen (130) aufweist, die mindestens entlang eines Abschnitts des Umfangs des Bandes verlaufen.

9. Bandförder-Vorrichtung gemäß Anspruch 8, **dadurch gekennzeichnet, dass** das Band (116) auf seinen gegenüberliegenden Seiten Querversteifungen (130) aufweist.

10. Bandfärder-Vorrichtung gemäß einem der vorherigen Ansprüche, **dadurch gekennzeichnet, dass** jede Wendeeinheit (18A, 18B) Mittel (50) zum seitlichen Spreizen von zwei Trumen (16A, 16B; 116A, 116B) des Bandes aufweist, die von derselben Wendewalze (40) kommen.

11. Bandförder-Vorrichtung gemäß einem der vorherigen Ansprüche, **dadurch gekennzeichnet, dass** die Wendeeinheiten (18A, 18B) derart sind, dass die Seiten des Bandes, die in Kontakt mit der Flüssigkeit stehen, entlang des zulaufenden Trums und des ablaufenden Trums des Bandes einander gegenüberliegend sind.

12. Verfahren zum Transport von Materialien, **dadurch gekennzeichnet, dass** es die Schritte des Zum-Zirkulieren-Bringens, unmittelbar auf der Oberfläche einer Flüssigkeitsfläche, eines Bandes (16; 116) einer Förder-Vorrichtung gemäß einem der vorherigen Ansprüche und des Anordnens des zu transportierenden Materials auf dem oberen Stützbereich (20) des auf der Oberfläche der Flüssigkeitsfläche schwimmenden Bandes aufweist.

13. Verfahren zur Rückgewinnung einer auf einer Flüssigkeitsfläche schwimmenden Substanz, insbesondere Öl, **dadurch gekennzeichnet, dass** es das In-Bewegung-Bringen eines Bandes einer Förder-Vorrichtung gemäß dem Anspruch 8 oder 9 mit einer im Wesentlichen teilweise eingetauchten ersten Seite und einer zweiten seitliche Seite, die vollständig eingetaucht ist, aufweist.
